# EUROPEAN PATENT APPLICATION

(11) **EP 3 587 013 A1**
(43) Date of publication of application: **01.01.2020**
(21) Application number: 18179136.9
(22) Date of filing: 21.06.2018
(51) Int. Cl.: B23D 57/00, B28D 5/00, B28D 5/04

(54) **WIRE SAW AND METHOD OF DETERMINING A MOTION CHARACTERISTIC OF A WIRE DEFLECTION PULLEY OF A WIRE SAW**

(71) Applicant: Meyer Burger AG, 3645 GWATT (Thun) (CH)
(72) Inventor: INDERMÜHLE, Marc, 3633 Amsoldingen (CH); RAFAEL, Helge, 3652 Hilterfingen (CH); HAGNAUER, Christof, 3604 Thun (CH); FRECH, Gregor, 3012 Bern (CH)
(74) Representative: Patentbüro Paul Rosenich AG

(57) **Abstract**

The invention relates to a wire saw (1), particularly a wafer cutting wire saw for cutting a plurality of slabs or slices or wafers from a workpiece (2) or a wire saw for bricking and/or squaring a workpiece (2), comprising a control device (3) configured to receive and to evaluate sensor data of at least one sensor (4), wherein the sensor data contain information about a motion characteristic of at least one wire deflection pulley (5). Moreover the invention relates to a method of determining a motion characteristic and/or a wear state of a wire deflection pulley (5) of a wire saw (1).

## Description

The invention relates to a wire saw, particularly a wafer cutting wire saw for cutting a plurality of wafers from a workpiece or a wire saw for bricking and/or squaring a workpiece, comprising a control device.

In wire saws the cutting wire is exposed to different types of adverse impacts. Beside the wear caused by the actual cutting action, i.e. by the direct contact of the cutting wire with the workpiece, there arises the problem of substantial wear rate and also damages caused by components of the wire saw, particularly by wire guiding means, deflection pulleys and spools.

The object of the invention is to reduce the wear rate of the cutting wire and to increase its life time. Especially the rate of wire breakage should be decreased. If the wire breaks, the wafers that are being cut may be lost (leading to lower yields) or at least the quality is not optimal. In addition removing and replacing the broken wire is time consuming leading to less up-time. The risk of damages of the cutting wire should be reduced. Consequently the cutting quality, particularly the quality of the resulting wafers or material pieces, is expected to be increased due to reduced wear and defects of the cutting wire. Also up-time of the machine should be increased and losses due to wire breakage reduced. Preferably, this all while using the maximal lifetime of the pulleys.

The object is achieved by a wire saw as mentioned at the beginning in that the control device is configured to receive and to evaluate sensor data of at least one sensor, wherein the sensor data contain information about a motion characteristic of at least one wire deflection pulley (of the wire saw).

The information about a motion characteristic of at least one wire deflection pulley allows determining or estimating the impact of that pulley on the cutting wire, particularly the wear rate of the cutting wire caused by its contact with the pulley. The control device may comprise an algorithm, which determines or estimates in dependence of the sensor data that impact and/or which calculates in dependence of the sensor data a characteristic of the pulley, such as a stage of wear, particularly of the wire contact surface.

The wire deflection pulley deflects the cutting wire. Preferably the wire deflection pulley deflects the cutting wire about at least 10°, more preferred about at least 90°, most preferred about at least 170°.

The wire saw may also comprise a workpiece holder for holding the workpiece in the cutting area and means for moving the workpiece holder relative to the cutting wire section(s) defining the cutting area.

The control device of the wire saw preferably comprises a digital data processing unit and/or a data storage. Preferably, an algorithm is implemented within the control device capable of evaluating the sensor data of the at least one pulley sensor.

With the invention it has been found that the wire deflection pulleys of a wire saw, that may be driven or not, considerably contribute to the overall wear rate of the cutting wire. It has been further recognized that the motion of the deflection pulley gives an important hint to the wear caused by the direct contact of the cutting wire with the wire contact surface of the pulley. The sensor data containing information about a motion characteristic of at least one wire deflection pulley allow drawing conclusions about the wear state of the pulley itself and/or about an (abnormal or not optimal) motional state of the pulley (such as high bearing friction or tilted rotational axes of the pulley). In both cases the adverse impact on the cutting wire may be determined or estimated.

According to this information a certain wire deflection pulley may be exchanged or adjusted in due time, i.e. before severe damages occur on the cutting wire.

The advantages of the invention may be summarized as follows: Preventing the cutting wire from wire breakage caused by highly worn-out pulleys; detecting badly aligned pulleys or the pulley surface, i.e. if the rotational axis of the pulley is tilted relative to its nominal orientation (causing torsion of the wire and adverse saw marks in the resulting wafer/piece); comparing the wear rate of different pulleys; exploiting the maximal life time of the cutting wire associated with longer operation cycles and reduced maintenance; reliably predicting maintenance requirements.

In a preferred embodiment the wire saw is capable of slicing, squaring and/or bricking a piece of material such as hard brittle and/or semiconductor material. Such a wire saw may be used in the industry of semiconductors, electronic components, photovoltaics, optical components and photonics. Typical (hard and/or brittle) materials that may be sawn by the wire saw are GaAs, germanium, polycrystalline or monocrystalline or mono-like silicon, InP, quartzes, sapphire or other ceramic materials.

In a preferred embodiment the cutting wire of the wire saw is a fixed abrasive wire, preferably a diamond wire or a nano tube wire.

In a preferred embodiment the at least one wire deflection pulley is a pulley without own drive (or non-driven pulley), the rotation of which is caused by motion transfer of the running cutting wire to the wire deflection pulley. Here, the pulley is "passive", i.e. the pulley rotates only due to the moving cutting wire. With other words: the motion is transferred from the cutting wire to the pulley (and not from the pulley to the cutting wire). In the case of a non-driven pulley the use of a sensor measuring a motion characteristic of the pulley is very advantageous because there are no other (indirect) possibilities to gain information about the motion of the pulley.

In a preferred embodiment the wire saw comprises
- wire guiding means for carrying at least one cutting wire section in the cutting area of the wire saw, preferably in form of wire guiding rollers for carrying a cutting wire web,
- a first wire path for transferring cutting wire from a wire supplying spool to the wire guiding means,
- a second wire path for transferring cutting wire from the wire guiding means to a wire receiving spool,
- wherein the at least one wire deflection pulley is arranged in the first wire path and/or in the second wire path,
- and wherein the at least one sensor is configured to measure a motion characteristic of the at least one wire deflection pulley and is in communication with the control device.

Usually the wire guiding means (rollers in the case of a wire web for cutting wafers; or single pulley(s) in the case of bricking or squaring a workpiece) have a drive. The drive(s) cause(s) the wire guiding means to rotate and the motion of the wire guiding means is transferred to the cutting wire. The cutting wire then moves at a certain velocity through the cutting area and from the cutting area to a deflection pulley which may be distanced from the cutting area.

Supplying spool and receiving spool may be spools, onto which cutting wire is wound up in multiple overlapping windings or layers, respectively, and/or may be spools (not shown) onto which cutting wire is wound up temporarily in multiple or single windings or layers (within one pilgrim cycle). The latter spools are disclosed in WO 2014 087340 A2 and may be regarded as (intermediate) storage spools. Such storage spools are usually coaxially arranged with the "unused-wire spool" and/or the "used-wire spool".

In a preferred embodiment the at least one sensor is a rotational speed sensor configured to measure as motion characteristic of the wire deflection pulley the rotational speed of the deflection pulley,
and/or wherein the at least one sensor is a vibration sensor configured to measure as motion characteristic a vibration of the wire deflection pulley,
and/or wherein the at least one sensor is configured to measure as motion characteristic the orientation of the rotational axis of the wire deflection pulley,
and/or wherein the sensor is configured to record the wire contact surface and/or the diameter of the wire contact surface of the wire deflection pulley.

A comparison of the rotational speed of the pulley with the (linear) velocity of the cutting wire (known e.g. by the control device controlling said velocity via the drive of the wire guiding means) allows to calculate the diameter (or radius, or circumference) of the wire contact surface of the pulley. A reduced diameter (or radius, or circumference) is a clear indication the wear state of the pulley's wire contact surface. The relation between rotational speed co of the pulley (e.g. in radians per second) and velocity v of the cutting wire is given as follows: *d* = 2*v*/*ω,* where d is the diameter of the circumferential wire contact surface of the pulley (which contacts and guides the cutting wire).

In a preferred embodiment the at least one sensor is an inductive sensor and/or a capacitive sensor and/or an optical sensor and/or an acoustic sensor. In a very preferred embodiment the sensor is an inductive sensor reliably allowing an exact determination of the rotational speed of the pulley. The inductive sensor may be arranged directly facing a rotating part of the pulley, preferably facing a shaft portion of the pulley.

The rotating part of the pulley may comprise permanent magnet(s) and/or have a structured shape that is not perfectly rotationally symmetric such as only symmetric under the rotation over certain angles such as 180°, 120°, 90° etc., which may be easily detected by a stationary inductive sensor. Preferably, the pulley has such non-perfect rotational symmetry so that no additional measures need to be taken and the weight of the pulley can be kept low.

In a preferred embodiment the at least one sensor is arranged on the mounting of the wire deflection pulley, preferably on the bearing support of the wire deflection pulley, and/or faces a shaft portion of the wire deflection pulley. With this embodiment a direct measurement may be performed without external perturbations.

In a preferred embodiment the control device is configured to evaluate sensor data of the at least one sensor and (to take as counter measure:)
- to output in dependence of the sensor data and/or in dependence of a value derived therefrom an alarm and/or information via a human machine interface, preferably a screen, a loudspeaker and/or a warning light,
- and/or to stop or slow down in dependence of the sensor data and/or in dependence of a value derived therefrom a drive which drives the cutting wire and/or a drive which moves the workpiece holder (through the cutting area).

The alarm/information and/or the stop of the wire saw indicates to an operator that the pulley has to be exchanged or re-adjusted.

In a preferred embodiment the control device of the wire saw is configured to derive at least one value from the sensor data of the at least one sensor, wherein the at least one value is a direct or indirect measure for the diameter of the wire contact surface of the wire deflection pulley, preferably corresponds to the diameter of the wire contact surface of the wire deflection pulley, and/or is a direct or indirect measure for the rotating unbalance or associated vibrations of the wire deflection pulley.

As a direct measure the value of the diameter itself may be understood. An indirect measure for the diameter may be e.g. the radius (d/2) or the circumference (*d x* Pi) or any other value from which the diameter may be calculated.

In a preferred embodiment the control device of the wire saw is configured
to compare and/or to process the sensor data and/or a value derived therefrom with the velocity of the cutting wire
and/or to derive from the sensor data and/or a value derived therefrom and from the velocity of the cutting wire the diameter of the wire contact surface of the wire deflection pulley.

As already mentioned the relation between the rotational speed of the pulley and the velocity of the cutting wire reliably allows deriving the diameter of the pulley's circumferential wire contact surface.

In a preferred embodiment the wire saw comprises at least two wire deflection pulleys, preferably at least one first wire deflection pulley arranged in the first wire path and at least one second wire deflection pulley arranged in the second wire path, wherein the wire saw comprises at least two sensors, wherein a first sensor is configured to measure a motion characteristic of a first wire deflection pulley and a second sensor is configured to measure a motion characteristic of a second wire deflection pulley. The sensor data associated with different pulleys may be compared and/or brought in relation to each other. An outstanding wear of one of the pulleys may be recognized easily.

In a preferred embodiment the control device is configured to compare the sensor data of the first sensor and/or a value derived therefrom with the sensor data of the second sensor and/or a value derived therefrom with each other.

The problem is also solved by a method of determining a motion characteristic and/or a wear state of a wire deflection pulley of a wire saw, particularly according to one of the preceding claims, comprising the step of measuring a motion characteristic of the at least one wire deflection pulley by means of at least one sensor.

In a preferred embodiment the method comprises the step of evaluating sensor data of the at least one sensor and
- the step of outputting in dependence of the sensor data and/or in dependence of a value derived therefrom an alarm and/or information via a human machine interface, preferably a screen, a loudspeaker and/or a warning light,
- and/or the step of stopping or slowing down in dependence of the sensor data and/or in dependence of a value derived therefrom a drive which drives the cutting wire.

In a preferred embodiment the method comprises the step of deriving at least one value from the sensor data of the at least one sensor, wherein the at least one value is a direct or indirect measure for the diameter of the wire contact surface of the wire deflection pulley, preferably corresponds to the diameter of the wire contact surface of the wire deflection pulley.

In a preferred embodiment the method comprises
- a step of comparing and/or processing the sensor data and/or a value derived therefrom with the velocity of the cutting wire
- and/or a step of deriving from the sensor data and/or a value derived therefrom and the velocity of the cutting wire the diameter of the wire contact surface of the wire deflection pulley
- and/or a step of taking a counter measure based thereon.

Further embodiments of the invention are indicated in the figures and in the dependent claims. The list of reference marks forms part of the disclosure. The invention will now be explained in detail by the drawings. In the drawings:
- Fig. 1: shows a wire saw according to the invention,
- Fig. 2: shows a wire deflection pulley with an inductive sensor,
- Fig. 3: shows a wire deflection pulley with an optical sensor,
- Fig. 4: shows a flow chart of an inventive method.
- Fig. 5: shows a pulley with three holes having a 120° symmetry and an induction sensor.

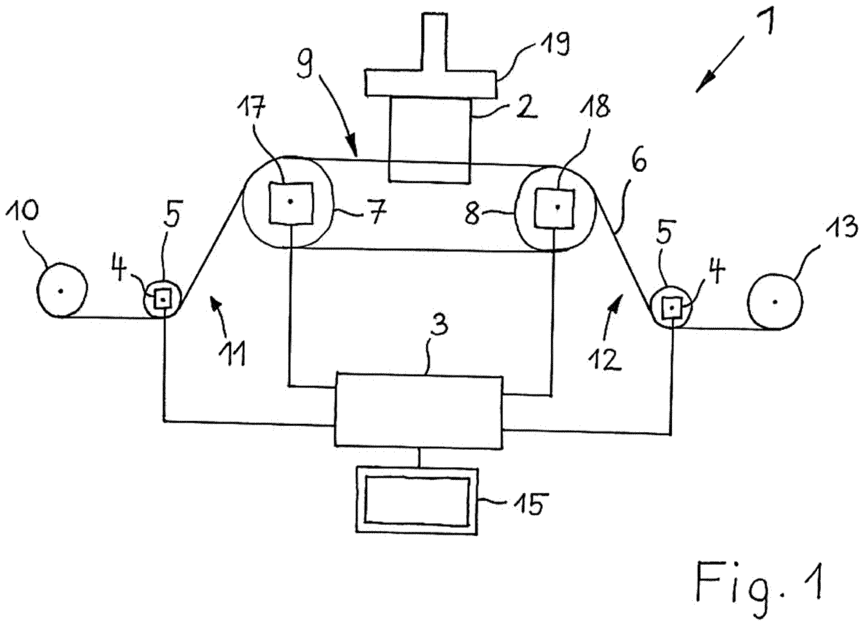

Fig. 1 shows wire saw 1, which may be e.g. a wafer cutting wire saw for cutting a plurality of wafers from a workpiece 2 or a wire saw for bricking and/or squaring a workpiece 2. The wire saw 1 comprises a control device 3 configured to receive and to evaluate sensor data of at least one sensor 4. The sensor data contain information about a motion characteristic of at least one wire deflection pulley 5 of the wire saw 1.

Moreover, the wire saw 1 of Fig. 1 comprises wire guiding means for carrying at least one cutting wire section in the cutting area of the wire saw. Here, the wire guiding means are in form of wire guiding rollers 7, 8 carrying the cutting wire web 9. The wire web 9 is formed by the cutting wire 6 running in multiple loops around the wire guiding rollers 7, 8.

The cutting wire 6 runs a long a first wire path 11 from a wire supplying spool 10 to the cutting area or wire guiding rollers 7, 8 and along a second wire path 12 from the cutting area or the wire guiding rollers 7, 8 to a wire receiving spool 13. In Fig. 1 the wire supplying spool 10 is regarded as "unused-wire spool" and the wire receiving spool as "used-wire spool".

Supplying spool and receiving spool may be spools, onto which cutting wire is wound up in multiple overlapping windings or layers, respectively, and/or may be spools (not shown) onto which cutting wire is wound up temporarily in multiple or single windings or layers (within one pilgrim cycle). The latter spools are disclosed in WO 2014 087340 A2 and may be regarded as (intermediate) storage spools. Such storage spools are usually coaxially arranged with the "unused-wire spool" and/or the "used-wire spool".

As can be seen from Fig. 1 in each wire path 11, 12 a wire deflection pulley 5 is arranged.

A sensor 4 is associated to each pulley 5 and configured to measure a motion characteristic of the associated pulley 5. The sensors 4 are in communication with the control device 3, which may be a digital data processing unit, particularly a computer.

While the wire guiding rollers 7, 8 are coupled to rotary drives 17, 18, the deflection pulley 5 is without own drive. I.e. the rotation of the pulley is (only) caused by motion transfer of the running cutting wire 6 to the wire deflection pulley 5.

The at least one sensor 4 is preferably a rotational speed sensor configured to measure (as motion characteristic) the rotational speed of the wire deflection pulley 5.

In an alternative embodiment the at least one sensor 4 may be a vibration sensor configured to measure (as motion characteristic) a vibration of the wire deflection pulley 5. In a further alternative the at least one sensor 4 may be configured to measure (as motion characteristic) the orientation of the rotational axis of the wire deflection pulley 5. In a further alternative the sensor 4 may configured to record the wire contact surface of the wire deflection pulley 5.

The at least one sensor 4 may be an inductive sensor and/or a capacitive sensor and/or an optical sensor and/or an acoustic sensor.

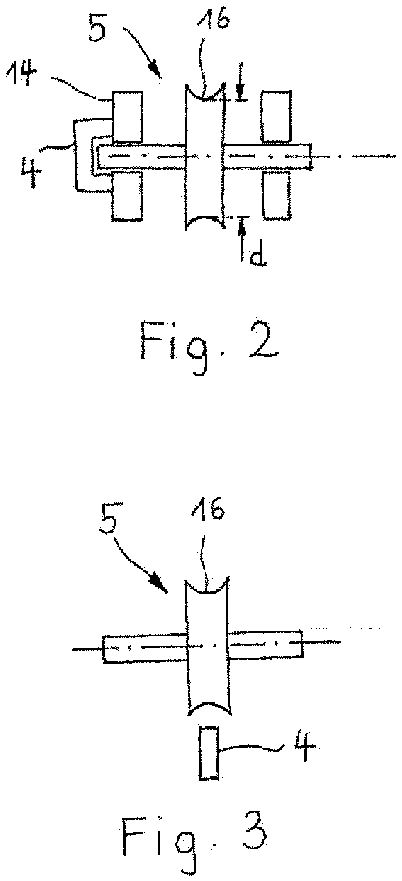

Fig. 2 shows that the pulley sensor 4 is arranged on the mounting 14 of the wire deflection pulley 5, preferably on the bearing support of the wire deflection pulley 5. The sensor 4, which in the embodiment of Fig. 2 is an inductive sensor, faces a shaft portion of the wire deflection pulley 5.

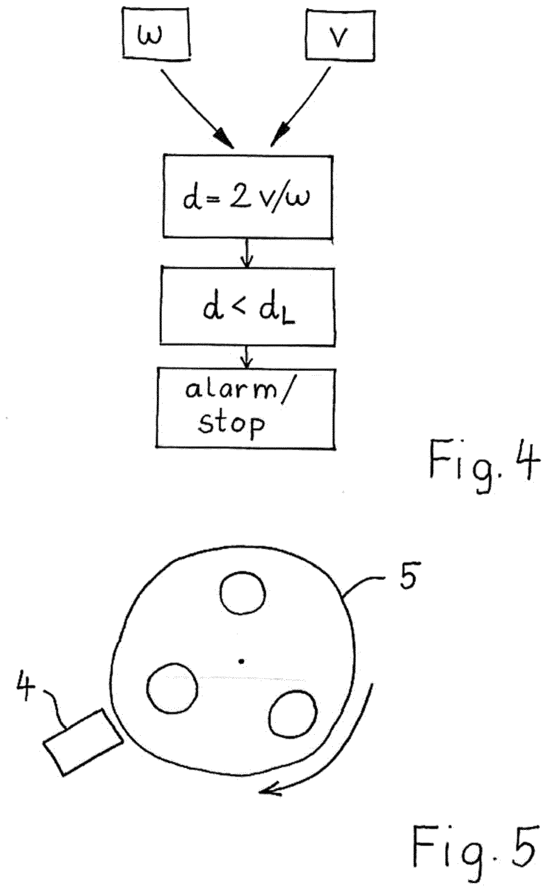

Fig. 3 shows an alternative arrangement of the sensor 4 which is an inductive sensor (see also Fig. 5). Sensors using a light barrier would be possible as well.

Fig. 5 shows a wire deflection pulley 5 with structures - here in form of three holes having a 120° rotational symmetry. An inductive sensor "sees" the structures (different material arrangement) as the pulley rotates enabling the sensor (or the control device) to count the rotations (per unit time). If the wire deflection pulley 5 cannot be detected inductively, e.g. metal parts and/or permanent magnets may be incorporated in it. Alternatively, a sensor 4 using a light barrier may be used to "look" through holes in the pulley 5.

The control device 3 is configured to evaluate the sensor data of sensor(s) 4. It is preferred, if - in dependence of the sensor data and/or in dependence of a value derived therefrom - an alarm and/or information via a human machine interface 15 (see Fig. 1), preferably a screen, a loudspeaker and/or a warning light, is outputted.

Alternatively or additionally the control device may stop or slow down drive(s) 17, 18 which drives - via the wire guiding rollers 7, 8 - the cutting wire 6. In a further alternative the control device may stop or slow down a drive (not shown) which moves the workpiece holder 19 and the workpiece (through the cutting area).

The control device 3 may be configured to derive at least one value from the sensor data of the sensor(s) 4, wherein the value is a direct or indirect measure for the diameter d of the wire contact surface 16 (see Fig. 2) of the wire deflection pulley 5. As direct measure the value may correspond to the diameter itself or as indirect measure to the radius, circumference of the wire contact surface 16 or any other value, from which the diameter d may be derived. Alternatively, the value may be a direct or indirect measure for the rotating unbalance or associated vibrations of the wire deflection pulley 5 (such as dynamic unbalances, abnormal tilt of the rotational axis of the pulley, etc.).

In a preferred embodiment shown in Fig. 4 the control device 3 is configured to compare and/or to process the sensor data and/or a value derived therefrom (here the rotational speed ω) with the velocity v of the cutting wire 6. Here, the diameter d of the wire contact surface 16 of the wire deflection pulley 5 may be derived. In the case the diameter d becomes smaller than a given diameter limit d_{L} the control device sets the actions as described above (alarm information and/or stop or slowing down).

In the case of at least two wire deflection pulleys 5, preferably at least one first wire deflection pulley 5 arranged in the first wire path 11 and at least one second wire deflection pulley 5 arranged in the second wire path 12 (as can be seen from Fig. 1), the wire saw 1 may comprise at least two sensors 4. A first sensor 4 is configured to measure a motion characteristic of a first wire deflection pulley 5 and a second sensor 4 is configured to measure a motion characteristic of a second wire deflection pulley 5. The control device 3 may be now configured to compare the sensor data of the first sensor 4 and/or a value derived therefrom with the sensor data of the second sensor 4 and/or a value derived therefrom with each other.

The invention also relates to a method of determining a motion characteristic and/or a wear state of a wire deflection pulley 5 of a wire saw 1. The method comprises the step of measuring a motion characteristic of the at least one wire deflection pulley 5 by means of at least one sensor 4 and may be performed by a wire saw as described above. The preferred and optional method steps are apparent from the description above.

The invention is not restricted to these embodiments. Other variants will be obvious for the person skilled in the art and are considered to lie within the scope of the invention as formulated in the following claims. Individual features described in all parts of the above specification, particularly with respect to the figures may be combined with each other to form other embodiments and/or applied mutatis mutandis to what is described in the claims and to the rest of the description, even if the features are described in respect to or in combination with other features.

### List of reference signs

- 1: wire saw
- 2: workpiece
- 3: control device
- 4: sensor
- 5: wire deflection pulley
- 6: cutting wire
- 7: wire guiding roller
- 8: wire guiding roller
- 9: cutting wire web
- 10: wire supplying spool
- 11: first wire path
- 12: second wire path
- 13: wire receiving spool
- 14: mounting of the wire deflection pulley 5
- 15: human machine interface
- 16: wire contact surface
- 17: drive
- 18: drive
- 19: workpiece holder
- d: diameter of the wire contact surface 16
- v: velocity of the cutting wire 6
- ω: rotational speed

## Claims

1. Wire saw (1), particularly a wafer cutting wire saw for cutting a plurality of slabs or slices or wafers from a workpiece (2) or a wire saw for bricking and/or squaring a workpiece (2), comprising a control device (3) configured to receive and to evaluate sensor data of at least one sensor (4), wherein the sensor data contain information about a motion characteristic of at least one wire deflection pulley (5).

2. Wire saw according to claim 1, wherein the at least one wire deflection pulley (5) is a pulley without own drive, the rotation of which is caused by motion transfer of the running cutting wire (6) to the wire deflection pulley (5),
and/or wherein the at least one wire deflection pulley (5) deflects the cutting wire (6) about at least 10°, more preferred about at least 90°, most preferred about at least 170°.

3. Wire saw according to claim 1 or 2, wherein the wire saw (1) comprises
- wire guiding means for carrying at least one cutting wire section in the cutting area of the wire saw, preferably in form of wire guiding rollers (7, 8) for carrying a cutting wire web (9),
- a first wire path (11) for transferring cutting wire (6) from a wire supplying spool (10) to the wire guiding means,
- a second wire path (12) for transferring cutting wire (6) from the wire guiding means to a wire receiving spool (13),
- wherein the at least one wire deflection pulley (5) is arranged in the first wire path (11) and/or in the second wire path (12),
- and wherein the at least one sensor (4) is configured to measure the motion characteristic of the at least one wire deflection pulley (5) and is in communication with the control device (3).

4. Wire saw according to one of the preceding claims, wherein the at least one sensor (4) is a rotational speed sensor configured to measure as motion characteristic of the wire deflection pulley (5) the rotational speed of the wire deflection pulley (5),
and/or wherein the at least one sensor (4) is a vibration sensor configured to measure as motion characteristic a vibration of the wire deflection pulley (5),
and/or wherein the at least one sensor (4) is configured to measure as motion characteristic the orientation of the rotational axis of the wire deflection pulley (5),
and/or wherein the sensor (4) is configured to record the wire contact surface (16) and/or the diameter of the wire contact surface (16) of the wire deflection pulley (5).

5. Wire saw according to one of the preceding claims, wherein the at least one sensor (4) is an inductive sensor and/or a capacitive sensor and/or an optical sensor and/or an acoustic sensor.

6. Wire saw according to one of the preceding claims, wherein the at least one sensor (4) is arranged on a mounting (14) of the wire deflection pulley (5), preferably on the bearing support of the wire deflection pulley (5), and/or faces a shaft portion of the wire deflection pulley (5).

7. Wire saw according to one of the preceding claims, wherein the control device (3) is configured to evaluate sensor data of the at least one sensor (4) and to take as counter measure:
- to output in dependence of the sensor data and/or in dependence of a value derived therefrom an alarm and/or information via a human machine interface (15), preferably a screen, a loudspeaker and/or a warning light,
- and/or to stop or slow down in dependence of the sensor data and/or in dependence of a value derived therefrom a drive which drives the cutting wire (6) and/or a drive which moves the workpiece holder (19).

8. Wire saw according to one of the preceding claims, wherein the control device (3) of the wire saw (1) is configured to derive at least one value from the sensor data of the at least one sensor (4), wherein the at least one value is a direct or indirect measure for the diameter of the wire contact surface (16) of the wire deflection pulley (5), preferably corresponds to the diameter of the wire contact surface (16) of the wire deflection pulley (5), and/or is a direct or indirect measure for the rotating unbalance or associated vibrations of the wire deflection pulley (5) or controls the flow of cutting fluid.

9. Wire saw according to one of the preceding claims, wherein the control device (3) of the wire saw (1) is configured to compare and/or to process the sensor data and/or a value derived therefrom with the velocity of the cutting wire (6) and/or to derive from the sensor data and/or a value derived therefrom and from the velocity of the cutting wire (6) the diameter of the wire contact surface (16) of the wire deflection pulley (5) and preferably takes a counter measure based thereon.

10. Wire saw according to one of the preceding claims, wherein the wire saw (1) comprises at least two wire deflection pulleys (5), preferably at least one first wire deflection pulley (5) arranged in the first wire path (11) and at least one second wire deflection pulley (5) arranged in the second wire path (12), wherein the wire saw (1) comprises at least two sensors (4), wherein a first sensor (4) is configured to measure a motion characteristic of a first wire deflection pulley (5) and a second sensor (4) is configured to measure a motion characteristic of a second wire deflection pulley (5).

11. Wire saw according to claim 10, wherein the control device (3) is configured to compare the sensor data of the first sensor (4) and/or a value derived therefrom with the sensor data of the second sensor (4) and/or a value derived therefrom with each other and preferably takes a counter measure based thereon.

12. Method of determining a motion characteristic and/or a wear state of a wire deflection pulley (5) of a wire saw (1), particularly according to one of the preceding claims, comprising the step of measuring a motion characteristic of the at least one wire deflection pulley (5) by means of at least one sensor (4), wherein preferably the at least one wire deflection pulley (5) is a pulley without own drive, the rotation of which is caused by motion transfer of the running cutting wire (6) to the wire deflection pulley (5).

13. Method according to claim 12, wherein the method comprises the step of evaluating sensor data of the at least one sensor (4) and
- the step of outputting in dependence of the sensor data and/or in dependence of a value derived therefrom an alarm and/or information via a human machine interface (15), preferably a screen, a loudspeaker and/or a warning light,
- and/or the step of stopping or slowing down in dependence of the sensor data and/or in dependence of a value derived therefrom a drive which drives the cutting wire (6).

14. Method according to claim 12 or 13, wherein the method comprises the step of deriving at least one value from the sensor data of the at least one sensor (4), wherein the at least one value is a direct or indirect measure for the diameter (d) of the wire contact surface (16) of the wire deflection pulley (5), preferably corresponds to the diameter (d) of the wire contact surface (16) of the wire deflection pulley (5).

15. Method according to one of the claims 12 to 14, wherein the method comprises
- a step of comparing and/or processing the sensor data and/or a value derived therefrom with the velocity of the cutting wire (6)
- and/or a step of deriving from the sensor data and/or a value derived therefrom and the velocity of the cutting wire (6) the diameter of the wire contact surface (16) of the wire deflection pulley (5)
- and/or a step of taking a counter measure based thereon.
